# EUROPÄISCHE PATENTSCHRIFT

(11) **EP 3 600 758 B1**
(45) Veröffentlichungstag und Bekanntmachung des Hinweises auf die Patenterteilung: **20.01.2021**
(21) Anmeldenummer: 18714466.2
(22) Anmeldetag: 20.03.2018
(51) Int. Cl.: B23P 21/00, B62D 65/02

(54) **FERTIGUNGSSTATION UND FERTIGUNGSVERFAHREN**
MANUFACTURING STATION AND MANUFACTURING PROCESS
STATION DE FABRICATION ET PROCÉDÉ DE FABRICATION

(30) Priorität: 21.03.2017 DE 202017101643 U
(43) Veröffentlichungstag der Anmeldung: 05.02.2020
(73) Patentinhaber: KUKA Systems GmbH, 86165 Augsburg (DE)
(72) Erfinder: THORWARTH, Paul, 86156 Augsburg (DE)
(74) Vertreter: ERNICKE Patent- und Rechtsanwälte
(86) Internationale Anmeldenummer: PCT/EP2018/056988
(87) Internationale Veröffentlichungsnummer: WO 2018/172336

(56) Entgegenhaltungen:
- WO-A1-2015/132378
- WO-A1-2016/131961
- DE-A1-102008 009 995
- DE-U1-202008 012 602

## Beschreibung

Die Erfindung betrifft eine Fertigungsstation und ein Fertigungsverfahren mit den Merkmalen im Oberbegriff des Verfahrens- und Vorrichtungshauptanspruchs.

Eine solche automatische Fertigungsstation ist aus der WO 2015/132378 A1 bekannt.

Eine weitere solche automatische Fertigungsstation ist aus der WO 2016/131961 A1 bekannt. Sie weist einen Fertigungsbereich mit einer Arbeitsstelle und mehreren programmgesteuerten Fertigungsrobotern auf. Die Werkstücke werden der Fertigungsstation von außen auf einem Werkstückträger zugeführt. Dieser ist lösbar auf einem autonomen Förderfahrzeug angeordnet und wird von diesem in die Fertigungsstation gefahren und an der Arbeitsstelle positioniert. Die Bearbeitung der Werkstücke erfolgt auf dem Werkstückträger.

Aus der Praxis sind ferner Robotergärten mit mehreren Arbeitsstellen und mehrtaktigen Arbeitsprozessen bekannt, bei denen Werkstücke von Fertigungsrobotern bearbeitet und gehandhabt sowie zwischen den Arbeitsstellen transportiert werden.

Es ist Aufgabe der vorliegenden Erfindung, eine verbesserte Fertigungstechnik aufzuzeigen.

Die Erfindung löst diese Aufgabe mit den Merkmalen im Verfahrens- und Vorrichtungshauptanspruch.

Die beanspruchte Fertigungstechnik, d.h. die Fertigungsstation, das Fertigungsverfahren und eine Fertigungsanlage, haben verschiedene Vorteile.

Die beanspruchte Fertigungstechnik ermöglicht eine Entkoppelung von Fertigungsstationen und dort ablaufenden Arbeitsprozessen sowie Arbeitstakten von einer Fördereinrichtung in der Fertigungsanlage, welche die Fertigungsstationen untereinander und mit einem Logistikbereich verbindet. Bei der Fördereinrichtung können Wartezeiten an Fertigungsstationen sowie Überkapazitäten an Fördermitteln vermieden werden. Der Werkstück- und Produktionsfluss innerhalb einer Fertigungsanlage kann verbessert und beschleunigt werden.

Die automatische Fertigungsstation weist mehrere Arbeitsstellen und ein stationsgebundenes Transportmittel für einen Transport der Produktionsladungsträger innerhalb der Fertigungsstation auf. An oder vor der Fertigungsstation kann ein Umladen der Produktionsladungsträger von der externen Fördereinrichtung auf das Transportmittel erfolgen. Innerhalb des bevorzugt als Robotergarten ausgebildeten Fertigungsbereichs können die Produktionsladungsträger neben und entlang der Arbeitsstellen transportiert werden. Die Produktionsladungsträger können mit dem bevorzugt mehrtaktigen Arbeits- oder Produktionsablauf im Fertigungsbereich mitbewegt werden und sind für die Arbeitsprozesse an zumindest einigen Arbeitsstellen verfügbar.

Das Werkstück kann einteilig oder mehrteilig, vorzugsweise als Teilesatz von Karosseriebauteilen, ausgebildet sein. Das Werkstück kann vollständig oder teilweise während des bevorzugt mehrtaktigen Arbeitsprozesses vom Produktionsladungsträger mittels eines Fertigungsroboters entnommen, an den Arbeitsstellen bearbeitet und gehandhabt sowie zwischen den Arbeitsstellen weiter transportiert werden. Etwaig benötigte weitere Teile des Werkstücks können auf dem Produktionsladungsträger verfügbar sein und bedarfsweise von einem Fertigungsroboter der jeweiligen Arbeitsstelle und dem dortigen Arbeitsprozess zugeführt werden. Die Arbeitsprozesse können von beliebiger Art und Zahl sein.

Am Ende wird das bearbeitete Werkstück wieder auf den Produktionsladungsträger zurück gelegt, der dann mit dem Werkstück vom Transportmittel entladen und über die externe Fördereinrichtung oder auf andere Weise, z.B. über eine Ablage, weiter transportiert werden kann.

Das Transportmittel ist neben den Arbeitsstellen angeordnet und vorzugsweise als sequenzielles Transportmittel ausgebildet. Das Transportmittel kann mehrere Produktionsladungsträger, insbesondere in einer Reihe hintereinander, aufnehmen. Es weist mehrere Aufnahmestellen für jeweils einen Produktionsladungsträger auf. Die Zahl der Aufnahmestellen ist gleich oder größer als die Zahl der Arbeitsstellen und/oder gleich oder größer als die Zahl der Arbeitstakte in der Fertigungsstation.

Das Transportmittel ist bevorzugt als Linearförderer ausgebildet. Es kann sich um einen Stetigförderer oder um einen intermittierenden Förderer handeln. Das Transportmittel weist eine an die Arbeitstakte angepasste Transporttaktung oder eine entsprechend angepasste stetige Transportgeschwindigkeit auf. Mit seinen Arbeitsstellen befindet es sich im Arbeitsbereich von Fertigungsrobotern, die ein Teil des Werkstücks entnehmen und der ebenfalls in ihrem Arbeitsbereich befindlichen Arbeitsstelle bzw. der dortigen Werkstückaufnahme zuführen können.

Ein Speicher für beladene und/oder leere Produktionsladungsträger in der Fertigungsstation hat verschiedene Vorteile. Einerseits können fehlerhafte Werkstücke bereits innerhalb der Fertigungsstation aus dem Produktionsfluss ausgeschleust und in den Speicher gebracht werden. Der Speicher kann auch Pufferzwecken dienen, falls der über mehrere Fertigungsstationen laufende Produktionsfluss in der Fertigungsanlage stockt oder unterbrochen wird. Außerdem kann die externe Fördereinrichtung entlastet und optimiert werden. Durch die Speichermöglichkeit kann der Arbeits- oder Produktionsablauf innerhalb der Fertigungsstation ungehindert weiterlaufen.

Eine Ladeeinrichtung kann zum Be- und Entladen der externen Fördereinrichtung oder zum Ablegen oder Aufnehmen von Produktionsladungsträgern an einer Ablage genutzt werden, welche sich zwischen benachbarten Fertigungsstationen befinden kann. Die Ladeeinrichtung kann auch den Speicher bedienen.

Die Produktionsladungsträger können flexibel und auch multifunktional sein. Sie können einerseits an mehrere im Typ unterschiedliche Werkstücke adaptiert sein. Sie können dadurch z.B. Teilesätze von verschiedenen Fahrzeug- oder Karossiertypen, aufnehmen. Dies ermöglicht eine typflexible Produktion im freien Mix in der Fertigungsstation und in der Fertigungsanlage. Die Produktionsladungsträger können außerdem bedarfsweise Werkzeuge, Vorrichtungen oder andere in einer Fertigungsstation benötigte Komponenten aufnehmen und transportieren. Hierdurch kann eine Fertigungsstation bedarfsweise und schnell umgerüstet werden.

Die Produktionsladungsträger können stapelfähig ausgebildet sein. Sie können Abstandshalter aufweisen, die eine Stapelung mitsamt einem aufgenommenen Werkstück ermöglichen. Über eine Stapelfähigkeit kann z.B. die Kapazität des Speichers bei geringem Platzbedarf erhöht werden.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: schematisch und ausschnittsweise eine Fertigungsanlage mit mehreren Fertigungsstationen, einem Logistikbereich und einer Fördereinrichtung und
- Figur 2:: eine Schemadarstellung einer Fertigungsstation.

Die Erfindung betrifft eine Fertigungsstation sowie ein Fertigungsverfahren für Werkstücke (2). Die Erfindung betrifft ferner eine Fertigungsanlage (1) mit mehreren Fertigungstationen und einem Fertigungsablauf.

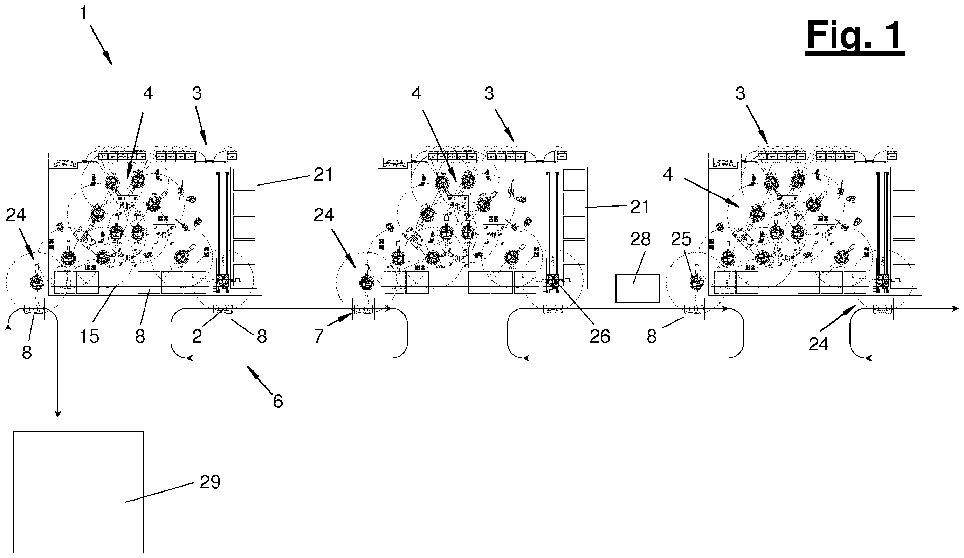

Figur 1 zeigt in einer ausschnittsweisen Schemadarstellung eine automatische Fertigungsanlage (1), die mehrere automatische Fertigungsstationen (3) beinhaltet. Die Fertigungsanlage (1) kann ferner eine Fördereinrichtung (6) aufweisen, welche alle oder zumindest einige Fertigungsstationen (3) untereinander verbindet. Die Fertigungsanlage (1) kann ferner einen Logistikbereich (29) aufweisen, der ebenfalls an die Fördereinrichtung (6) angeschlossen sein kann.

Die Werkstücke (2) können von beliebiger Art und Ausbildung sein. Vorzugsweise handelt es sich um Karosseriebauteile, insbesondere metallische Blechteile. Ein Werkstück (2) kann einteilig oder mehrteilig sein. Vorzugsweise ist es mehrteilig und als Teilesatz ausgebildet.

In der Fertigungsanlage (1) und in den Fertigungsstationen (3) können beliebige Arbeitsprozesse an den Werkstücken (2) ausgeführt werden. Vorzugsweise handelt es sich um Assemblier- und Fügeprozesse. Aus einzelnen Karosserieteilen werden gefügte Teilegruppen gebildet, die weiter mit Teilen ergänzt und zu größeren Karosseriekomponenten gefügt werden.

Die Werkstücke (2) befinden sich auf Produktionsladungsträgern (8), die nachfolgend abgekürzt als PLT bezeichnet werden. Die PLTs (8) sind z.B. als rahmen- oder schalenartige Gestelle oder Paletten ausgebildet und nehmen das ein- oder mehrteilige Werkstück (2) positioniert auf. Hierfür sind entsprechende Werkstückhalter, ggf. mit Spannfunktion, vorhanden. Die PLTs (8) haben eine lesbare, individuelle Kennung. Sie sind für die Steuerungen der Fertigungsanlage (1) und der Fertigungsstationen (3) identifizierbar. Ferner besteht eine Zuordnung zu den ebenfalls individualisierten Werkstücken (2) und ihrem PLT (8).

Die Fördereinrichtung (6) kann in beliebig geeigneter Weise ausgebildet sein. In der gezeigten und bevorzugten Ausführungsform besteht sie aus einer Flotte von autonomen und einzeln steuerbaren Fördermitteln (7). Dies können z.B. flurgebundene automatische, selbstlenkende und fahrerlose Transportfahrzeuge sein. Die Fördermittel (7) können jeweils einen oder mehrere PLTs (8) lösbar und in vorgegebener Position aufnehmen und transportieren. Die Fördermittel (7) können als Einzelfahrzeug oder als Fahrzeuggruppe, z.B. als autonomes Zugfahrzeug mit ein oder mehreren Anhängern, ausgebildet sein. Die Fördermittel (7) werden von einem Fleetmanager programmgesteuert dirigiert. Sie transportieren die PLTs (8) zu und von den Fertigungsstationen (3).

Figur 1 zeigt eine Reihe von untereinander produktions- und fördertechnisch verknüpften Fertigungsstationen (3). Die fördertechnische Verkettung kann über die Fördereinrichtung (6) und deren beispielhaft gezeigte ein oder mehreren Loops erfolgen. Alternativ oder zusätzlich kann eine Beförderung von PLTs (8) zwischen benachbarten Fertigungsstationen (3) über eine dazwischen angeordnete Ablage (28) erfolgen.

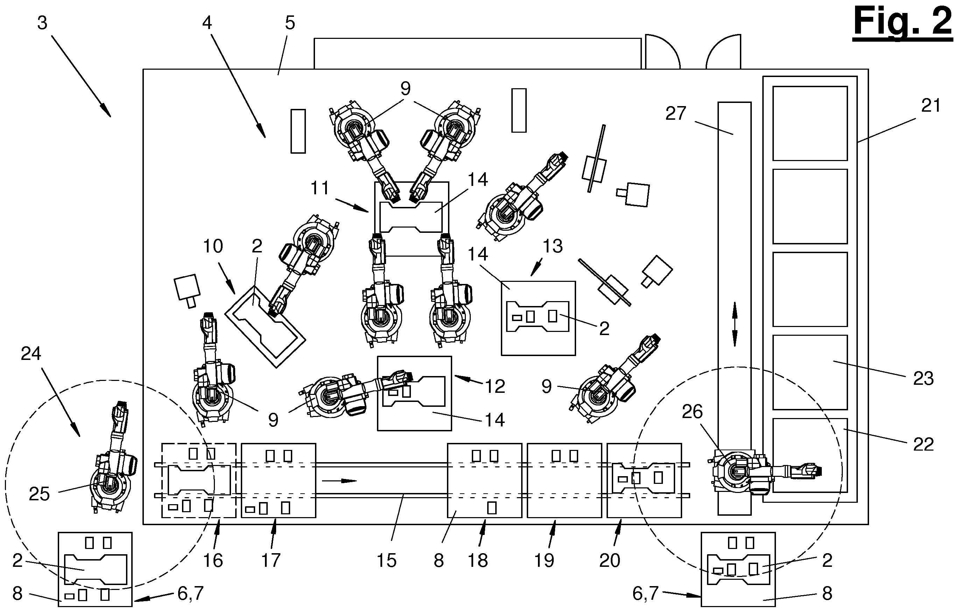

Figur 2 zeigt schematisch eine Fertigungsstation (3), die in gleicher oder ähnlicher Ausbildung mehrfach in der Fertigungsanlage (1) vorhanden sein kann. Die Fertigungsstation (3) weist einen Fertigungsbereich (4) mit mehreren Arbeitsstellen (10,11,12,13) und mit mehreren programmgesteuerten Fertigungsrobotern (9) auf. Im Fertigungsbereich (4) befindet sich auch ein stationsgebundendes Transportmittel (15) für einen Transport der PLTs (8) innerhalb der Fertigungsstation (3). Ferner kann ein Speicher (21) im Fertigungsbereich (4) angeordnet sein. Der Fertigungsbereich (4) mit den vorgenannten Komponenten kann außenseitig von einer Schutzabtrennung (5), z.B. einem Schutzzaun mit mehreren steuerbaren und überwachten Zugängen, ausgebildet sein. Der Fertigungsstation (3) kann eine Ladeeinrichtung (24) zugeordnet sein.

Der Fertigungsbereich (4) ist z.B. als Robotergarten ausgebildet, wobei an den örtlich im Fertigungsbereich (4) verteilten Arbeitsstellen (10,11,12,13) jeweils eine Werkstückaufnahme (14) angeordnet ist. Die Fertigungsroboter (9) sind als programmierbare Industrieroboter mit mehreren rotatorischen und/oder translatorischen Achsen ausgebildet. Sie tragen ein ggf. wechselbares Werkzeug.

Ein oder mehrere Fertigungsroboter (9) sind dazu ausgebildet und programmiert, ein Werkstück im Fertigungsbereich (4) von und auf einen Produktionsladungsträger (8) zu laden. Einer oder mehrere Fertigungsroboter (9) sind ferner dazu ausgebildet und programmiert, ein Werkstück (2) zwischen den Arbeitsstellen (10,11,12,13) zu transportieren. Sie können ein Werkstück (2) von einer Werkstückaufnahme (14) mit einem Greifwerkzeug aufnehmen und an einer Werkstückaufnahme (14) einer anderen Arbeitsstelle ablegen.

In der Fertigungsstation (3) und im Fertigungsbereich (4) wird ein Arbeitsprozess am Werkstück (2) ausgeführt, der mehrere Arbeitsschritte und mehrere Arbeitstakte umfasst. Diese werden an den Arbeitsstellen (10,11,12,13) durchgeführt.

Das stationsgebundene Transportmittel (15) ist einzeln oder mehrfach vorhanden. Es ist neben den Arbeitsstellen (10,11,12,13) angeordnet. Es erstreckt sich auch entlang der Arbeitsstellen (10,11,12,13). Das Transportmittel (15) kann sich am Rand des Fertigungsbereichs (4) oder an anderer Stelle befinden.

Das Transportmittel (15) ist vorzugsweise flurgebunden angeordnet. Es ist als sequenzielles Transportmittel ausgebildet. Es dient dazu, mehrere PLTs (8) aufzunehmen, und zu transportieren, vorzugsweise in einer geschlossenen Reihe hintereinander. Das Transportmittel (15) weist mehrere Aufnahmestellen (16-20) für jeweils einen PLT (8) auf. In den Zeichnungen ist der Übersicht halber nur ein Teil der PLTs (8) auf dem Transportmittel (15) dargestellt.

Das Transportmittel (15) hat vorzugsweise einen endlichen Transport- oder Förderweg. Es befördert die aufgenommenen PLTs (8) in einer vorgegebenen Richtung. Das Transportmittel (15) ist in den gezeigten Ausführungsformen als einteiliger und über die Länge des Förderwegs durchgehender Förderer ausgebildet. Alternativ kann ein Transportmittel (15) in mehrere Förderabschnitte segmentiert sein.

Das Transportmittel (15) ist in der gezeigten Ausführungsform als Linearförderer mit einer geraden Erstreckung ausgebildet. Das Transportmittel (15), insbesondere der Linearförderer, kann z.B. als Band- oder Rollenförderer, Skidförderer, Hubshuttle oder auf andere geeignete Weise ausgebildet sein.

In einer anderen Ausführungsvariante kann das Transportmittel (15) eine zumindest bereichsweise gebogene Erstreckung haben. Es kann auch eine endlose oder ringförmig geschlossene Förderbahn haben.

Das Transportmittel (15) kann stetig bzw. kontinuierlich oder intermittierend fördern. Es kann eine an die Arbeitstakte im Fertigungsbereich (4) angepasste Transporttaktung oder stetige Transportgeschwindigkeit aufweisen. Hierdurch kann der Transportfortschritt der PLTs (8) an den Produktions- oder Arbeitsfortschritt angepasst werden. Die Zahl der Aufnahmestellen (16-20) des Fördermittels (12) ist bevorzugt gleich oder größer als die Zahl der Arbeitsstellen (10,11,12,13) bzw. gleich oder größer als die Zahl der Arbeitstakte im Fertigungsbereich (4) .

Das Transportmittel (15) befindet sich mit seinen Aufnahmestellen (16-20) im Arbeitsbereich von zumindest einigen der Fertigungsroboter (9). Durch den abgestimmten Transportfortschritt oder -vorschub können die PLTs (8) mit dem Produktions- oder Arbeitsfortschritt der zugeordneten und zuvor entladenen Teilen des Werkstücks (2) synchron mitbewegt werden.

Auf den PLTs (8) können sich noch andere Teile des Werkstücks (2) befinden. Sie stehen an den Arbeitsstellen (10,11,12,13) bedarfsweise zur Verfügung. Ein Fertigungsroboter (9) an einer Arbeitsstelle (10,11,12,13) kann ein Werkstückteil vom PLT (8) entnehmen und der Arbeitsstelle (10,11,12,13) und dem dortigen Arbeitsprozess zuführen. Er kann bedarfsweise auch Werkstückteile aus dem Arbeitsprozess auf einen PLT (8) zurücklegen. Der Werkstück- und Teilefluss zwischen den Arbeitsstellen (10,11,12,13) kann teilweise auch über das Transportmittel (15) erfolgen.

In den gezeigten Ausführungsformen wird ein mit einem Werkstück (2) beladener PLT (8) dem Transportmittel (15) von einer Ladeeinrichtung (24) zugeführt und auf der ersten Aufnahmestelle (16) abgesetzt. Anschließend entnimmt ein Fertigungsroboter (9) von diesem PLT (8) das Werkstück (2) oder Teile davon und bringt es oder sie zu der ersten Arbeitsstelle (10). Der PLT (8) kann dabei in der erwähnten Weise vollständig oder teilweise entladen werden. In Figur 2 ist eine Teilentladung gezeigt, wobei Werkstückteile am PLT (8) verbleiben.

Das Werkstück (2) wird nach Beendigung des ersten Arbeitsschrittes bzw. Arbeitstaktes an der Arbeitsstelle (10) zur nächsten Arbeitsstelle (11) weitertransportiert und dort wiederum an einer Werkstückaufnahme (14) positioniert sowie weiterbearbeitet. Während des ersten Arbeitstaktes kann der PLT (8) an der Aufnahmestelle (16) stehen bleiben oder langsam weitertransportiert werden, wobei es sich bedarfsweise noch im Arbeitsbereich des Fertigungsroboters (9) befindet und die Entladung weiterer Werkstückteile und deren Zuführung zur Arbeitsstelle (10) ermöglicht.

Mit dem Weitertransport des Werkstücks (2) oder seiner Teile zwischen den Arbeitsstellen (10,11,12,13) wird auch der PLT (8) in der Reihe der Aufnahmestellen (16-20) entsprechend weitertransportiert. Ein PLT (8) an der Aufnahmestelle (18) ist z.B. für einen Arbeitsprozess an der Arbeitsstelle (12) und an der Aufnahmestelle (19) für die Arbeitsstelle (13) verfügbar.

Am Ende des Arbeits- oder Produktionsprozesses und am Ende der Fördermittels (15) wird das Werkstück (2) von der letzten Arbeitsstelle (13) durch einen Fertigungsroboter (9) auf den PLT (8) an der ggf. letzten Aufnahmestelle (20) zurückgeladen.

Die Ladeeinrichtung (24) ist vorzugsweise der Fertigungsstation (3) zugeordnet. Die Ladeeinrichtung (24) kann einen oder mehrere, z.B. zwei, Laderoboter (25,26) beinhalten. Die Laderoboter (25,26) sind z.B. jeweils an einem Ende des Transportmittels (15) angeordnet. Sie können innerhalb oder außerhalb des Fertigungsbereichs (4) und der Fertigungsstation (3) angeordnet sein.

Der eingangseitige Laderoboter (25) ist z.B. außerhalb und am einen Ende der Fertigungsstation (3) angeordnet. Er lädt mit einem Werkstück (2) beladene PLTs (8) von einem Fördermittel (7) ab und legt sie auf die erste Aufnahmestelle (16). Der ausgangseitige Laderoboter (26) ist innerhalb der Fertigungsstation (3) und am Ende des Fördermittels (15) angeordnet. Er entnimmt den wieder mit einem Werkstück (2) beladenen PLT (8) von der letzten Aufnahmestelle (20) und lädt ihn auf ein bereit stehendes gleiches oder anderes Fördermittel (7). In der Variante von Figur 1 kann der Laderoboter (26), den beladenen PLT (8) auch auf eine Ablage (28) zwischen benachbarten Fertigungsstationen (3) ablegen.

Die Fertigungsstation (3) kann gemäß Figur 2 einen Speicher (21) mit ein oder mehreren Speicherplätzen (22,23), insbesondere in einer Reihenanordnung, für jeweils einen oder mehrere leere oder mit einem Werkstück (2) beladene PLTs (8) aufweisen. Der Speicher kann als Puffer für PLTs (8) mit qualitativ guten Werkstücken dienen. Er kann auch PLTs (8) mit Werkstücken (2) aufnehmen, die nicht in Ordnung sind und bei einer Qualitätsprüfung ausgesondert wurden. Der Speicher (21) kann in der Nähe des Transportmittels (15), insbesondere an dessen ausgangseitigem Endbereich, angeordnet sein. Er kann quer zum Transportmittel (15) ausgerichtet sein.

Der Speicher (21) kann innerhalb der Schutzabtrennung (5) angeordnet sein. Er kann als Regallager, Drehspeicher oder in beliebig anderer Weise ausgebildet sein. Der Speicher (21) kann sich an einem Rand des Fertigungsbereichs (4) befinden. Er kann eigenständig ausgebildet und angeordnet sein. Er kann alternativ oder zusätzlich in das Transportmittel (15) integriert sein.

Der Speicher (21) wird von einer Handhabungseinrichtung bedient. Er kann gefüllt und geleert sowie bedarfsweise umgeschichtet werden. Diese Handhabungseinrichtung kann eigenständig ausgebildet und angeordnet sein. Sie kann z.B. auch der Laderoboter (26) sein. Dieser ist z.B. zur Vergrößerung seines Arbeitsbereichs auf einer Zusatzachse (27) angeordnet. Dies kann z.B. eine gerade Fahrachse sein, die sich entlang der Reihe der Speicherplätze (22,23) erstreckt.

Die PLTs (8) können stapelfähig ausgebildet sein. Hierbei können z.B. leere PLTs (8) in einem Stapel aufeinander abgelegt werden. Es ist außerdem möglich, dass PLTs (8) mitsamt einem aufgenommenen Werkstück (2) übereinander gestapelt werden. Hierfür können die PLTs (8) aufrechte Abstandshalter aufweisen, die z.B. an den Eckbereichen und an der Oberseite der PLTs (8) angeordnet sind. Die z.B. stangenförmigen Abstandshalter können mit adaptierten Aufnahmen an der Unterseite der PLTs (8) zusammenwirken für eine stabile und formschlüssige Stapelbildung. Bei Einsatz von stapelbaren PLTs (8) kann der Speicher (21) vereinfacht werden, wobei die Speicherplätze (22,23) als reservierte Bodenflächen ausgebildet sein können. Die PLTs (8) können beim Auf- und Abstapeln von der besagten Handhabungseinrichtung, einem Fertigungsroboter (9) oder einem Laderoboter (25,26) gehandhabt werden.

Der eingangs genannte Logistikbereich (29) kann verschiedene Funktionen und Ausbildungen haben. Er kann zum einen eine Bereitstellung von PLTs (8) und Fördermitteln (7) sowie von Werkstücken (2) und ggfs. von Werkzeugen aufweisen. Ferner können eine Kommissionierung für die Zusammenstellung von Werkstücken (2) und eine Ladeeinrichtung für das Beladen von PLTs (8) mit Werkstücken (2) vorhanden sein. Mittels einer weiteren Ladeeinrichtung können die PLTs (8) auf die Fördermittel (7) auf- und abgeladen werden. In Abwandlung ist es möglich, die bereit gestellten und kommissionierten Werkstücke (2) auf PLTs (8) zu laden, die bereits mit einem Fördermittel (7) verbunden sind und von diesem transportiert werden. Ferner können bedarfsweise Werkzeuge auf einen PLT (8) geladen und einer Arbeitsstation (8) bedarfsweise zur Verfügung gestellt werden. Sie können mittels der Fertigungsroboter (9) und des Transportmittels (15) in einer Fertigungsstation (3) verteilt werden.

Eine Fertigungsstation (3) kann weitere Komponenten beinhalten. Dies können z.B. Vorrichtungen sein, die an den Arbeitsstellen (10,11,12,13) und im Arbeitsbereich der dortigen Fertigungsroboter (9) angeordnet sind. Derartige Vorrichtungen können z.B. Schweißvorrichtungen, Auftragvorrichtungen oder dgl. sein. Ferner kann eine Fertigungsstation (3) die besagte Steuerung, Mess- und Prüfeinrichtungen zur Qualitätssicherung sowie Versorgungseinrichtungen für benötigte Medien, z.B. elektrische Energie, Druckluft, Hydraulikflüssigkeit, Klebstoffe, Pulver oder dgl. aufweisen. An eine Fertigungsstation (3) können außerdem weitere Zuführeinrichtungen für Bauteile bzw. Werkstückteile angeschlossen sein.

Das Transportmittel (15) kann in anderer Weise ausgebildet sein und funktionieren. Bei einer vollständigen Entladung eines Werkstücks (2) können z.B. die Entlade- und Beladestelle zusammengefasst werden. Das Transportmittel (15) kann als Turmspeicher ausgebildet sein, in dem die entladenen und eingelagerten PLTs (8) umgeschichtet werden, um rechtzeitig wieder zum Beladen mit dem ihnen zugeordneten Werkstück (2) bereit zu stehen. Dies kann nach dem FiFo-Prinzip erfolgen. Statt eines Turmspeichers kann auch ein Drehtisch oder ein anderes Speichermittel eingesetzt werden. Bei dieser Abwandlung entspricht die Zahl der Aufnahme- oder Speicherstellen des Transportmittels (15) der Zahl der Arbeitsstellen (10,11,12,13) bzw. Arbeitstakte.

In Abwandlung der gezeigten Ausführungsform kann der Fertigungsbereich (4) auf eine ggfs. ausgelagerte Arbeitsstelle für einen Arbeitsschritt oder Nebenprozess aufweisen, der nur ab und zu benötigt wird. Die dargestellte Ausführungsform ist für einen sequenziellen Arbeitsablauf in einer Fertigungsstation (3) ausgebildet, wobei nur ein einzelner Förderstrang oder eine einzelne Förderbahn vorhanden ist. Für andere Arten von Produktions- oder Arbeitsabläufen, die von einer strikten Sequenz abweichen und parallele Abschnitte beinhalten, kann auch das Transportmittel (15) entsprechend angepasst sein und parallele Förderbahnen bzw. Förderabschnitte aufweisen.

In einer Ausführungsvariante kann die Ladeeinrichtung (24) bzw. ein Laderoboter einem Fördermittel (7) zugeordnet sein. In weiterer Abwandlung kann ein Fertigungsroboter (9) die Funktion eines Laderoboters (25,26) übernehmen. Eine separate Ladeeinrichtung (24) kann dabei entbehrlich sein.

### BEZUGSZEICHENLISTE

- 1: Fertigungsanlage
- 2: Werkstück, Teilesatz
- 3: Fertigungsstation
- 4: Fertigungsbereich
- 5: Schutzabtrennung
- 6: Fördereinrichtung, Fleet
- 7: Fördermittel
- 8: Produktionsladungsträger PLT
- 9: Fertigungsroboter
- 10: Arbeitsstelle
- 11: Arbeitsstelle
- 12: Arbeitsstelle
- 13: Arbeitsstelle
- 14: Werkstückaufnahme
- 15: Transportmittel, Linearförderer
- 16: Aufnahmestelle
- 17: Aufnahmestelle
- 18: Aufnahmestelle
- 19: Aufnahmestelle
- 20: Aufnahmestelle
- 21: Speicher, Puffer
- 22: Speicherplatz
- 23: Speicherplatz
- 24: Ladeeinrichtung
- 25: Laderoboter Zufuhr
- 26: Laderoboter Abfuhr
- 27: Fahrachse
- 28: Ablage
- 29: Logistikbereich

## Patentansprüche

1. Automatische Fertigungsstation für Werkstücke (2), insbesondere für Karosseriebauteile, die einen Fertigungsbereich (4) mit einer Arbeitsstelle und mit mehreren programmgesteuerten Fertigungsrobotern (9) aufweist, wobei die Werkstücke (2) der Fertigungsstation (3) auf Produktionsladungsträgern (8) von extern zugeführt werden, **dadurch gekennzeichnet, dass** die Fertigungsstation (3) mehrere Arbeitsstellen (10,11,12,13) und ein stationsgebundenes Transportmittel (15) für einen Transport der Produktionsladungsträger (8) innerhalb der Fertigungsstation (3) aufweist, wobei einer oder mehrere Fertigungsroboter (9) dazu ausgebildet sind, ein Werkstück (2) zwischen den Arbeitsstellen (10,11,12,13) zu transportieren.

2. Fertigungsstation nach Anspruch 1, **dadurch**
**gekennzeichnet, dass** das Transportmittel (15) als sequenzielles Transportmittel, bevorzugt als Linearförderer, ausgebildet ist.

3. Fertigungsstation nach Anspruch 1 oder 2, **dadurch**
**gekennzeichnet, dass** das das Transportmittel (15) dazu ausgebildet ist, mehrere Produktionsladungsträger (8) aufzunehmen, wobei das Transportmittel (15) mehrere Aufnahmestellen (16-20) für jeweils einen Produktionsladungsträger (8) aufweist.

4. Fertigungsstation nach einem der vorhergehenden Ansprüche, **dadurch gekennzeichnet, dass** mehrere Fertigungsroboter (9) dazu ausgebildet sind, ein Werkstück (2) im Fertigungsbereich (4) von und auf einen Produktionsladungsträger (8) zu laden, wobei das Transportmittel (15) sich mit seinen Aufnahmestellen (16-20) im Arbeitsbereich der Fertigungsroboter (9) befindet.

5. Fertigungsstation nach einem der vorhergehenden Ansprüche, **dadurch gekennzeichnet, dass** die Fertigungsstation (3) eine Ladeeinrichtung (24) aufweist, die dazu ausgebildet ist, die Produktionsladungsträger (8) mit den Werkstücken (2) auf das Transportmittel (15) zu laden und/oder die Produktionsladungsträger (8) mit den Werkstücken (2) vom Transportmittel (15) zu entladen.

6. Fertigungsstation nach einem der vorhergehenden Ansprüche, **dadurch gekennzeichnet, dass** die Fertigungsstation (3) einen Speicher (21) für einen oder mehrere Produktionsladungsträger (8) mit einem Werkstück (2) aufweist.

7. Fertigungsstation nach Anspruch 6, **dadurch**
**gekennzeichnet, dass** der Speicher (21) in das Transportmittel (15) integriert ist.

8. Fertigungsstation nach einem der vorhergehenden Ansprüche, **dadurch gekennzeichnet, dass** der Produktionsladungsträger (8) ein mehrteiliges Werkstück (2), insbesondere einen Teilesatz, positioniert aufnimmt.

9. Automatische Fertigungsanlage mit mehreren Fertigungsstationen (3) für Werkstücke (2), insbesondere für Karosseriebauteile, wobei die Fertigungsstation (3) einen Fertigungsbereich (4) mit einer Arbeitsstelle und mit mehreren programmgesteuerten Fertigungsrobotern (9) aufweist und die Werkstücke (2) der Fertigungsstation (3) auf Produktionsladungsträgern (8) von extern zugeführt werden, **dadurch gekennzeichnet, dass** die Fertigungsstation (3) nach mindestens einem der Ansprüche 1 bis 8 ausgebildet ist.

10. Fertigungsanlage nach Anspruch 9, **dadurch**
**gekennzeichnet, dass** mehrere Fertigungsstationen (3) untereinander verkettet sind, wobei die Fertigungsanlage (1) eine automatische Fördereinrichtung (6) für Produktionsladungsträger (8) aufweist.

11. Fertigungsverfahren für Werkstücke (2), insbesondere für Karosseriebauteile, mittels einer automatischen Fertigungsstation (3), die einen Fertigungsbereich (4) mit einer Arbeitsstelle und mit mehreren programmgesteuerten Fertigungsrobotern (9) aufweist, wobei die Werkstücke (2) der Fertigungsstation (3) auf Produktionsladungsträgern (8) von extern zugeführt werden, **dadurch**
**gekennzeichnet, dass** die Fertigungsstation (3) mehrere Arbeitsstellen (10,11,12,13) aufweist, wobei der Produktionsladungsträger (8) innerhalb der Fertigungsstation (3) mit einem stationsgebundenen Transportmittel (15) transportiert wird, wobei einer oder mehrere Fertigungsroboter (9) ein Werkstück (2) zwischen den Arbeitsstellen (10,11,12,13) transportieren.

12. Verfahren nach Anspruch 31, **dadurch**
**gekennzeichnet, dass** einer oder mehrere Fertigungsroboter (9) ein Werkstück (2) im Fertigungsbereich (4) von und auf einen Produktionsladungsträger (8) laden.

13. Verfahren nach Anspruch 12, **dadurch**
**gekennzeichnet, dass** an oder vor der Fertigungsstation (3) die Produktionsladungsträger (8) mit einem Werkstück (2) von einer externen Fördereinrichtung (6) auf das Transportmittel (15) umgeladen werden.

14. Verfahren nach einem der Ansprüche 12 oder 13, **dadurch gekennzeichnet, dass** innerhalb des bevorzugt als Robotergarten ausgebildeten Fertigungsbereichs (4) die Produktionsladungsträger (8) neben und entlang der Arbeitsstellen (10,11,12,13) transportiert werden, wobei die Produktionsladungsträger (8) mit dem bevorzugt mehrtaktigen Arbeits- oder Produktionsablauf im Fertigungsbereich (4) mitbewegt werden und für die Arbeitsprozesse an zumindest einigen Arbeitsstellen (10,11,12,13) verfügbar sind.

15. Verfahren nach einem der Ansprüche 12 bis 14, **dadurch gekennzeichnet, dass** ein mehrteiliges, vorzugsweise als Teilesatz von Karosseriebauteilen ausgebildetes, Werkstück (2) vollständig oder teilweise während des bevorzugt mehrtaktigen Arbeitsprozesses vom Produktionsladungsträger (8) mittels eines Fertigungsroboters (9) entnommen, an den Arbeitsstellen (10,11,12,13) bearbeitet und gehandhabt sowie zwischen den Arbeitsstellen (10,11,12,13) weiter transportiert wird, wobei etwaig benötigte weitere Teile des Werkstücks (2) auf dem Produktionsladungsträger (8) verfügbar sind und bedarfsweise von einem Fertigungsroboter (9) der jeweiligen Arbeitsstelle (10,11,12,13) und dem dortigen Arbeitsprozess zugeführt werden.

## Claims

1. Automatic manufacturing station for workpieces (2), in particular for vehicle body components, which has a manufacturing region (4) having a workstation and having a plurality of programme-controlled manufacturing robots (9), wherein the workpieces (2) are fed from externally to the manufacturing station (3) on production load carriers (8), **characterized in that** the manufacturing station (3) has a plurality of workstations (10, 11, 12, 13) and a station-bound transport means (15) for transporting the production load carriers (8) within the manufacturing station (3), wherein one or more manufacturing robots (9) are designed to transport a workpiece (2) between the workstations (10, 11, 12, 13) .

2. Manufacturing station according to Claim 1, **characterized in that** the transport means (15) is designed as a sequential transport means, preferably as a linear conveyor.

3. Manufacturing station according to Claim 1 or 2, **characterized in that** the transport means (15) is designed to receive a plurality of production load carriers (8), wherein the transport means (15) has a plurality of receiving stations (16-20) for a respective production load carrier (8).

4. Manufacturing station according to one of the preceding claims, **characterized in that** a plurality of manufacturing robots (9) are designed to load a workpiece (2) in the manufacturing region (4) from and onto a production load carrier (8), wherein the transport means (15) is situated with its receiving stations (16-20) in the work region of the manufacturing robots (9).

5. Manufacturing station according to one of the preceding claims, **characterized in that** the manufacturing station (3) has a loading device (24) which is designed to load the production load carriers (8) containing the workpieces (2) onto the transport means (15) and/or to unload the production carriers (8) containing the workpieces (2) from the transport means (15).

6. Manufacturing station according to one of the preceding claims, **characterized in that** the manufacturing station (3) has a store (21) for one or more production load carriers (8) containing a workpiece (2).

7. Manufacturing station according to Claim 6, **characterized in that** the store (21) is integrated into the transport means (15).

8. Manufacturing station according to one of the preceding claims, **characterized in that** the production load carrier (8) receives a multi-part workpiece (2), in particular a parts set, in a positioned manner.

9. Automatic manufacturing installation having a plurality of manufacturing stations (3) for workpieces (2), in particular for vehicle body components, wherein the manufacturing station (3) has a manufacturing region (4) having a workstation and having a plurality of programme-controlled manufacturing robots (9), and the workpieces (2) are fed from externally to the manufacturing station (3) on production load carriers (8), **characterized in that** the manufacturing station (3) is designed according to at least one of Claims 1 to 8.

10. Manufacturing installation according to Claim 9, **characterized in that** a plurality of manufacturing stations (3) are concatenated with one another, wherein the manufacturing installation (1) has an automatic conveying device (6) for production load carriers (8).

11. Manufacturing method for workpieces (2), in particular for vehicle body components, by means of an automatic manufacturing station (3) which has a manufacturing region (4) having a workstation and having a plurality of programme-controlled manufacturing robots (9), wherein the workpieces (2) are fed from externally to the manufacturing station (3) on production load carriers (8), **characterized in that** the manufacturing station (3) has a plurality of workstations (10, 11, 12, 13), wherein the production load carrier (8) is transported within the manufacturing station (3) by a station-bound transport means (15), wherein one or more manufacturing robots (9) transport a workpiece (2) between the workstations (10, 11, 12, 13).

12. Method according to Claim 11, **characterized in that** one or more manufacturing robots (9) load a workpiece (2) in the manufacturing region (4) from and onto a production load carrier (8).

13. Method according to Claim 12, **characterized in that** the production load carriers (8) containing a workpiece (2) are transferred from an external conveying device (6) onto the transport means (15) at or upstream of the manufacturing station (3).

14. Method according to either of Claims 12 and 13, **characterized in that** the production load carriers (8) are transported next to and along the workstations (10, 11, 12, 13) within the manufacturing region (4), which preferably takes the form of a robot garden, wherein the production load carriers (8) are moved along with the preferably multi-cycle work or production sequence in the manufacturing region (4) and are available for the work processes at at least some workstations (10, 11, 12, 13) .

15. Method according to one of Claims 12 to 14, **characterized in that** a multi-part workpiece (2), which is preferably formed as a parts set of vehicle body components, is completely or partially removed from the production load carrier (8) by means of a manufacturing robot (9) during the preferably multi-cycle work process, is processed and handled at the workstations (10, 11, 12, 13) and is further transported between the workstations (10, 11, 12, 13), wherein any required further parts of the workpiece (2) are available on the production load carrier (8) and are fed as required from a manufacturing robot (9) to the respective workstation (10, 11, 12, 13) and to the work process at that location.

## Revendications

1. Station de fabrication automatique pour pièces usinées (2), notamment pour composants de carrosserie comportant une zone de fabrication (4) avec un poste de travail et avec plusieurs robots de fabrication (9) commandés par programme, les pièces usinées (2) de la station de fabrication (3) étant amenées sur des supports de chargement de production (8) depuis l'extérieur, **caractérisée en ce que** la station de fabrication (3) comporte plusieurs postes de travail (10, 11, 12, 13) et un moyen de transport (15) lié à la station pour un transport des supports de chargement de production (8) à l'intérieur de la station de fabrication (3), un ou plusieurs robots de fabrication (9) étant réalisés pour transporter une pièce usinée (2) entre les postes de travail (10, 11, 12, 13).

2. Station de fabrication selon la revendication 1, **caractérisée en ce que** le moyen de transport (15) est réalisé sous la forme d'un moyen de transport séquentiel, de façon préférée sous la forme d'un système de transport linéaire.

3. Station de fabrication selon la revendication 1 ou 2, **caractérisée en ce que** le moyen de transport (15) est réalisé pour loger plusieurs supports de chargement de production (8), le moyen de transport (15) comportant plusieurs points de réception (16-20) pour chaque support de chargement de production (8).

4. Station de fabrication selon l'une quelconque des revendications précédentes, **caractérisée en ce que** plusieurs robots de fabrication (9) sont réalisés pour charger une pièce usinée (2) dans la zone de fabrication (4) depuis un support de chargement de production (8) ou sur lui, le moyen de transport (15) se trouvant avec ses points de réception (16-20) dans la zone de travail des robots de fabrication (9).

5. Station de fabrication selon l'une quelconque des revendications précédentes, **caractérisée en ce que** la station de fabrication (3) comporte un dispositif de chargement (24) réalisé pour charger les supports de chargement de production (8) avec des pièces usinées (2) sur le moyen de transport (15) et/ou pour décharger du moyen de transport (15) les supports de chargement de production (8) avec les pièces usinées (2).

6. Station de fabrication selon l'une quelconque des revendications précédentes, **caractérisée en ce que** la station de fabrication (3) comporte un magasin (21) pour un ou plusieurs supports de chargement de production (8) avec une pièce usinée (2).

7. Station de fabrication selon la revendication 6, **caractérisée en ce que** le magasin (21) est intégré dans le moyen de transport (15).

8. Station de fabrication selon l'une quelconque des revendications précédentes, **caractérisée en ce que** le support de chargement de production (8) reçoit de façon bien positionnée une pièce usinée (2) en plusieurs parties, notamment un jeu de pièces.

9. Installation de fabrication automatique avec plusieurs stations de fabrication (3) pour pièces usinées (2), notamment pour composants de carrosserie, la station de fabrication (3) comportant une zone de fabrication (4) avec un poste de travail et avec plusieurs robots de fabrication (9) commandés par programme et les pièces usinées (2) de la station de fabrication (3) étant amenées sur les supports de chargement de production (8) depuis l'extérieur, **caractérisée en ce que** la station de fabrication (3) est réalisée selon au moins l'une quelconque des revendications 1 à 8.

10. Installation de fabrication selon la revendication 9, **caractérisée en ce que** plusieurs stations de fabrication (3) sont enchaînées les unes sous les autres, l'installation de fabrication (1) comportant un dispositif de transport automatique (6) pour les supports de chargement de production (8).

11. Procédé de fabrication pour pièces usinées (2), notamment pour composants de carrosserie, au moyen d'une station de fabrication automatique (3) comportant une zone de fabrication (4) avec un poste de travail et avec plusieurs robots de fabrication (9) commandés par programme, les pièces usinées (2) de la station de fabrication (3) étant amenées sur les supports de chargement de production (8) depuis l'extérieur, **caractérisé en ce que** la station de fabrication (3) comporte plusieurs postes de travail (10, 11, 12, 13), le support de chargement de production (8) étant transporté à l'intérieur de la station de fabrication (3) avec un moyen de transport (15) lié à la station, un ou plusieurs robots de fabrication (9) transportant une pièce usinée (2) entre les postes de travail (10, 11, 12, 13) .

12. Procédé selon la revendication 11, **caractérisé en ce qu'**un ou plusieurs robots de fabrication (9) chargent une pièce usinée (2) dans la zone de fabrication (4) depuis un support de chargement de production (8) et sur lui.

13. Procédé selon la revendication 12, **caractérisé en ce que** les supports de chargement de production (8) sont transbordés sur le moyen de transport (15) avec une pièce usinée (2) grâce à un dispositif de transport externe (6) au niveau de la station de fabrication (3) ou depuis elle.

14. Procédé selon l'une quelconque des revendications 12 ou 13, **caractérisé en ce que** les supports de chargement de production (8) sont transportés à côté et le long des postes de travail (10, 11, 12, 13) à l'intérieur de la zone de fabrication (4) réalisée de façon préférée sous la forme d'un jardin de robots, les supports de chargement de production (8) étant déplacés conjointement dans la zone de fabrication (4) avec le flux de travail ou de production, de façon préférée en plusieurs temps, et sont disponibles au niveau d'au moins quelques postes de travail (10, 11, 12, 13) pour les flux de travail.

15. Procédé selon l'une quelconque des revendications 12 à 14, **caractérisé en ce qu'**une pièce usinée (2) réalisée en plusieurs parties, de préférence sous la forme d'un jeu de pièces de composants de carrosserie, est retirée entièrement ou en partie pendant le flux de travail de façon préférée en plusieurs temps du support de chargement de production (8) à l'aide d'un robot de fabrication (9), qu'elle est traitée et manipulée au niveau des postes de travail (10, 11, 12, 13) ainsi que transportée en sus entre les postes de travail (10, 11, 12, 13), les pièces supplémentaires de la pièce usinée (2) pouvant éventuellement être nécessaires étant disponibles sur le support de chargement de production (8) et étant amenées si besoin au poste de travail (10, 11, 12, 13) respectif et au processus de travail y étant effectué grâce à un robot de fabrication (9).
